# FASCICULE DE BREVET EUROPEEN

(11) **EP 1 585 615 B1**
(45) Date de publication et mention de la délivrance du brevet: **10.09.2008**
(21) Numéro de dépôt: 03815425.8
(22) Date de dépôt: 29.12.2003
(51) Int. Cl.: B23K 37/04, B23K 26/42

(54) **LATTE POUR TABLE DE MACHINE DE DECOUPE LASER**
LATTE FÜR LASERSCHNEIDMASCHINENTISCH
SLAT FOR LASER CUTTING MACHINE TABLE

(30) Priorité: 09.01.2003 FR 0300193
(43) Date de publication de la demande: 19.10.2005
(73) Titulaire: Lectra SA, 33610 Cestas (FR)
(72) Inventeur: LE MASSON, Gilles, F-85600 Montaigu (FR)
(74) Mandataire: Joly, Jean-Jacques
(86) Numéro de dépôt international: PCT/FR2003/003930
(87) Numéro de publication internationale: WO 2004/065056

(56) Documents cités:
- WO-A-97/07903
- DE-U- 29 916 400
- FR-A- 2 586 607
- GB-A- 1 391 080
- PATENT ABSTRACTS OF JAPAN vol. 1996, no. 08, 30 août 1996 (1996-08-30) & JP 08 108291 A (MITSUBISHI ELECTRIC CORP), 30 avril 1996 (1996-04-30)

## Description

### Arrière-plan de l'invention

La présente invention concerne le domaine général des machines de découpe de papier, carton, bois fin, tissu technique tissé avec ou sans enduit, cuir ou autres au moyen d'un faisceau laser ; elle concerne plus particulièrement un système de latte pour table de dépose de machine de découpe laser.

Les machines de découpe laser sont en général utilisées pour les découpes de précision de formes complexes dans des produits en forme de feuille ou de plaque. Ces machines sont généralement constituées d'une table de dépose du produit à découper et d'un dispositif permettant la création d'un faisceau laser.

Bien que le dispositif laser soit un élément essentiel dans ces machines, la table de dépose du produit est également un élément majeur pour obtenir une découpe de qualité du produit d'intérêt. En effet, cette table doit assurer le support du produit à découper, et présenter une résistance suffisante vis-à-vis de l'attaque du faisceau laser, tout en assurant une dissipation efficace de la chaleur.

Actuellement, certaines tables de réception du produit à découper sont formées d'une juxtaposition de lattes dont la surface supérieure est destinée à supporter le produit pendant la découpe ; l'ensemble des lattes juxtaposées forme le plan de dépose du produit à découper (voir le document DE-A- 29916400).

Cette surface supérieure peut présenter une structure du type nid d'abeilles. Cependant, ce profil nid d'abeilles peut s'avérer difficile à nettoyer. En outre, en cas de détérioration, il est nécessaire de remplacer la latte dans son entier. Egalement, cette structure en nid d'abeilles ne forme pas un véritable obstacle à la progression du faisceau laser ce qui peut poser des problèmes de détérioration du matériel sous-jacent, ce qui oblige la présence d'un élément rapporté pour assurer la déviation dudit faisceau laser.

On connaît aussi de l'abrégé de brevet JP 08 108291 une table de découpe formée d'une juxtaposition de lames inclinées par rapport à la direction du faisceau laser afin de permettre une déflection du faisceau entre deux lames adjacentes.

Cette disposition inclinée des lames a pour but d'atténuer l'énergie du faisceau laser à mesure que celui-ci traverse la table. Toutefois, l'impact du faisceau laser sur les lames inclinées peut polluer et endommager le produit à découper.

### Objet et résumé de l'invention

La présente invention vise à remédier à ces inconvénients en proposant une latte constituée d'un bac contenant une pluralité de rayons juxtaposés, disposés parallèlement ou sensiblement parallèlement entre eux. Conformément à l'invention, chaque rayon se présente sous la forme d'une plaque de tôle mince pliée comprenant au moins deux parties raccordées le long d'une ligne de pliage, une première partie disposée sensiblement parallèlement à la direction d'incidence du faisceau laser et constituant une bande support dont l'arête supérieure libre forme un élément support du produit à découper, et une deuxième partie inclinée par rapport à la direction d'incidence du faisceau laser et constituant une bande oblique assurant la déflection du faisceau laser.

De la sorte, la bande support des rayons permet d'éloigner du produit supporté l'impact du faisceau laser sur la bande oblique, ce qui limite les effets de pollution ou d'endommagement possible du produit.

La bande support des rayons assure également une meilleure tenue mécanique des lattes au support du produit à découper et facilite le prélèvement du produit découpé en permettant un déchargement à l'aide d'un peigne.

La latte conforme à la présente invention présente ainsi une structure simple et est facile à fabriquer ; de plus, elle est aisée à nettoyer, notamment au moyen d'une brosse rotative.

Selon un mode de réalisation de l'invention, chaque rayon comprend en outre une troisième partie sensiblement parallèle à la première partie et formant un talon raccordé à la bande oblique le long d'une autre ligne de pliage.

Dans ce mode de réalisation, la distance séparant le plan de la bande support et le plan du talon, est avantageusement supérieure ou égale à la distance entre deux rayons juxtaposés d'un même bac. De la sorte, le faisceau laser passant entre deux rayons est nécessairement dévié par une bande oblique.

Selon une autre particularité, les rayons sont fixés sur le bac support par l'intermédiaire de moyens qui permettent leur démontage. Il est alors possible de remplacer les rayons indépendamment les uns des autres, et ainsi de remplacer uniquement les rayons endommagés, notamment par le faisceau laser, les chocs mécaniques ou autres.

La latte comprend alors avantageusement un bac comportant notamment deux parois latérales dont les extrémités supérieures sont repliées vers l'intérieur formant des replis obliques, munis sur toute leur longueur d'une pluralité de lumières ou encoches. Deux lumières en vis-à-vis reçoivent les ergots de forme complémentaire aménagés sur les bordures de côtés des rayons. L'assemblage des ergots dans les lumières correspondantes se fait alors de façon élastique et par clipsage.

La latte peut être constituée de rayons présentant un évidement de matière sur une surface maximale, compatible avec le maintien de la rigidité desdits rayons. Cet évidement permet notamment de réduire de façon notable le poids de chaque rayon et par conséquent le poids de la latte dans son entier, mais aussi d'améliorer la dissipation de chaleur en assurant une circulation d'air ou autre au sein desdites lattes.

La présente invention a encore pour objet une table de machine de découpe laser constituée d'une pluralité de lattes juxtaposées telles que définies précédemment.

### Brève description des dessins

L'invention est également illustrée par un mode de réalisation particulier, donné seulement à titre indicatif, décrit ci-après et représenté sur les figures annexées suivantes :
- la figure 1 est une représentation très schématique en perspective d'une machine de découpe laser munie de lattes conformes à la présente invention ;
- la figure 2 est une vue partielle en perspective d'une latte conforme à l'invention, pour une table de découpe laser telle que celle représentée sur la figure 1 ;
- la figure 3 est une vue par dessus de l'élément en forme de bac de la latte telle que représentée sur la figure 2 ;
- la figure 4 est une vue en coupe selon 4-4 de la figure 3 ;
- la figure 5 est une vue de face d'un rayon isolé de l'élément en forme de bac ;
- la figure 6 est une vue de côté du rayon représenté sur la figure 5 ;
- la figure 7 est une vue partielle de façon d'un rayon avant clipsage sur le bac de réception ;
- la figure 8 est une vue partielle de face d'un rayon clipsé sur le bac de réception ;
- la figure 9 est une représentation schématique d'une section longitudinale du bac contenant une pluralité de rayons clipsés ; et
- la figure 10 est une représentation schématique d'une section longitudinale du bac contenant une pluralité de rayons clipsés selon une variante de réalisation de l'invention.

### Description détaillée d'un mode de réalisation

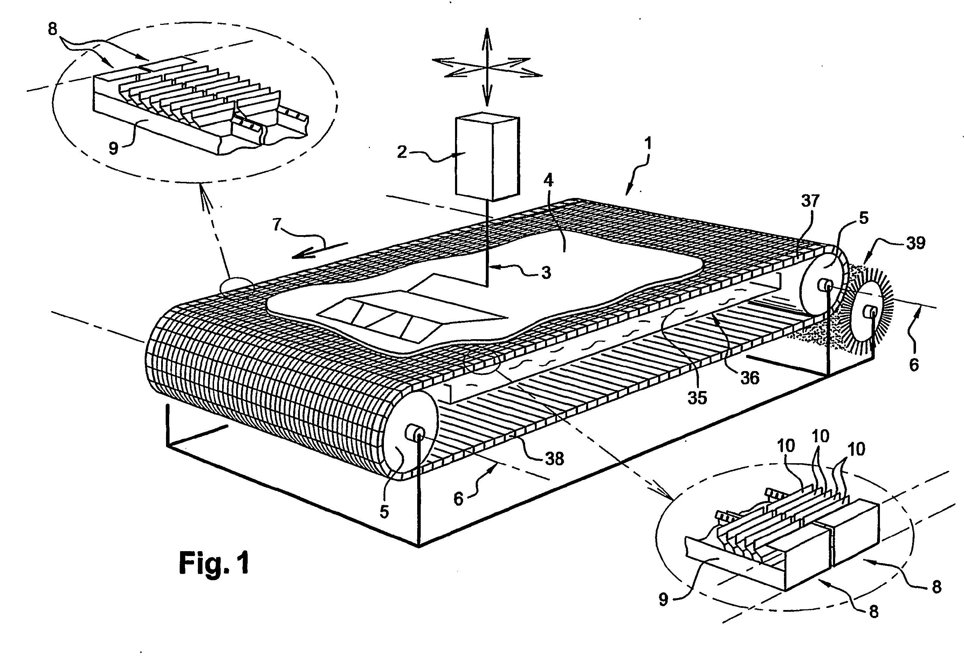

La figure 1 représente une machine de découpe laser constituée principalement d'une table mobile 1, de type tapis sans fin, et d'un portique 2 muni d'un système générateur de faisceau laser 3, destiné à permettre la découpe d'un matériau 4 disposé sur le plan de dépose formé par la table 1.

Le portique 2 est disposé à la verticale de la table 1. Ce portique 2 est muni d'un système laser classique, assurant la production du faisceau laser 3. La direction d'incidence du faisceau 3 est de préférence perpendiculaire au plan de dépose formé par la table 1. Le portique 2 est mobile dans trois directions, pour permettre le déplacement du faisceau 3 et ainsi réaliser les différentes formes à découper.

La table 1, telle que représentée figure 1, est du type tapis sans fin, de section longitudinale oblongue.

Cette table 1 est supportée par deux rouleaux 5, d'axe 6 horizontal ; les deux axes 6 sont parallèles l'un à l'autre ; l'un des rouleaux 5 est motorisé pour assurer l'entraînement du tapis sans fin 1, par exemple dans le sens de la flèche d'orientation 7. Les rouleaux 5 sont supportés au niveau de leurs extrémités par une structure de châssis.

Selon une variante de réalisation de l'invention, la table peut également être du type fixe.

Cette table 1 consiste en une pluralité de lattes 8 juxtaposées transversalement par rapport au sens de déplacement 7, parallèlement à l'axe 6 des rouleaux 5.

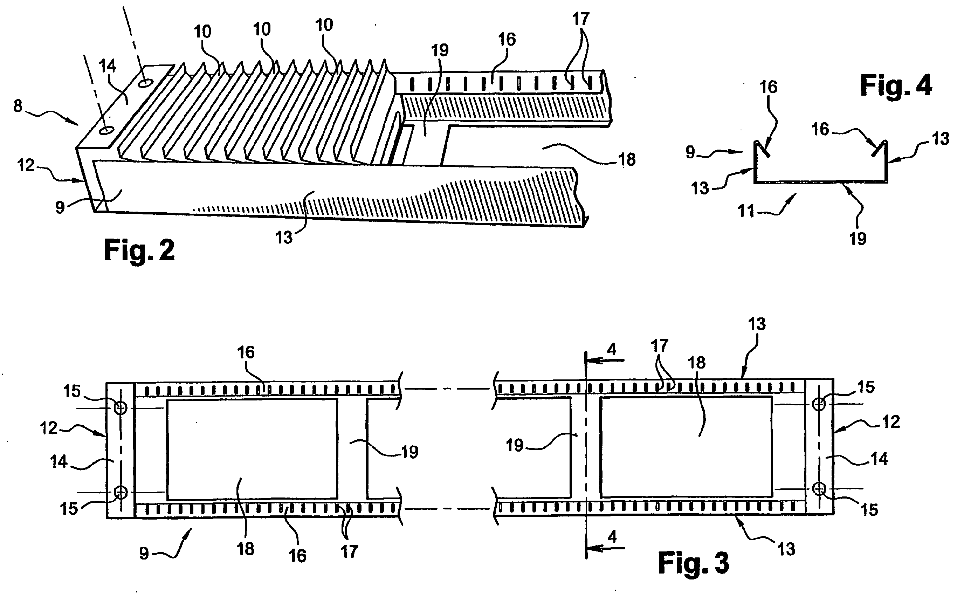

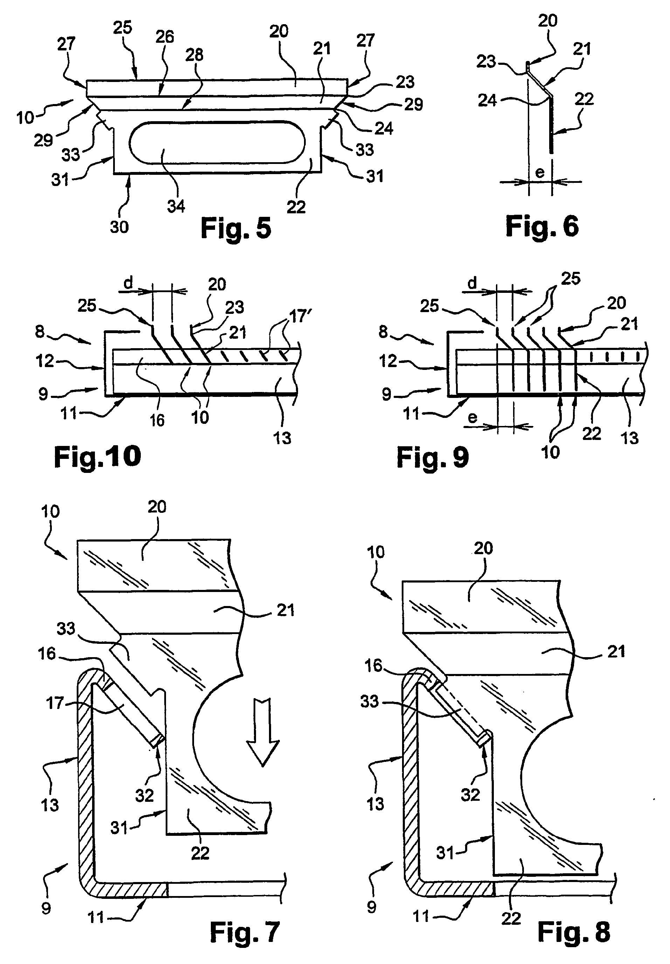

Comme représenté sur les figures 1 et 2, chaque latte 8 est constituée d'un bac 9 (figures 2 à 4) contenant une pluralité de rayons 10 juxtaposés et parallèles entre eux (figures 5 et 6). Les éléments 9, 10 peuvent être réalisés en acier ou en aluminium.

Le bac 9 (figures 2 à 4), élément structurel de la latte 8, est constitué d'un élément de fond plan 11 bordé par deux parois d'extrémités 12 et par deux parois de côtés 13. Les parois d'extrémités 12 présentent une forme générale rectangulaire, dont la partie supérieure 14 est repliée à l'équerre.

Ce repli 14 est muni de deux orifices 15 permettant la fixation de chacune des extrémités desdites lattes 8 sur le dispositif d'entraînement du tapis sans fin, par exemple du type courroie souple.

Les parois latérales 13, de forme également générale rectangulaire, comportent une partie supérieure 16 repliée vers l'intérieur du bac 9, de sorte à former un repli oblique, s'étendant sur toute la longueur de ladite paroi latérale 13.

Chaque repli oblique 16 est muni sur toute sa longueur d'une pluralité de lumières ou encoches 17, 17', réparties de manière homogène, et d'une forme générale rectangulaire s'étendant transversalement par rapport audit repli oblique 16.

L'élément de fond 11 comporte des ouvertures 18, séparées par des traverses 19 participant à la rigidité de l'ensemble.

Selon un mode de réalisation de l'invention représenté par les figures 5 et 6, chaque rayon 10 se présente sous la forme d'une plaque de tôle mince polyédrique comprenant trois parties planes 20, 21, 22, lesquelles parties sont raccordées par deux lignes de pliage 23 et 24, de façon à former une chicane.

Les trois parties planes 20, 21, 22 du rayon 10 sont plus précisément : - une première partie constituant une bande support 20 supérieure, - une deuxième partie constituant une bande oblique 21 intermédiaire, et - une troisième partie constituant un talon 22 inférieur. Le plan de la bande support 20 et le plan du talon 22 sont sensiblement parallèles entre eux et espacés d'une distance e par l'intermédiaire de la bande oblique 21.

Cette forme du rayon 10 permet une déviation du faisceau laser 3 sur la bande oblique 21, ce qui évite en particulier que le faisceau soit réfléchi vers le matériau 4 découpé.

La bande support 20, de forme générale rectangulaire, est disposée sensiblement parallèlement à la direction d'incidence du faisceau laser. Elle est délimitée par une bordure d'extrémité supérieure 25, une bordure d'extrémité inférieure 26, et deux bordures de côtés 27.

La bordure d'extrémité supérieure 25 de la bande support 20 participe au plan de dépose du produit ; les arrêtes supérieures 25 de l'ensemble des rayons 10 des lattes 8 dans un même plan forme la surface de dépose du produit.

La bordure d'extrémité inférieure 26 de la bande support 20 est reliée à la bande oblique 21 par la ligne de pliage 23.

La distance entre les deux bordures de côtés 27 est égale ou sensiblement égale à la distance entre les deux surfaces extérieures des parois latérales 13 du bac 9. Cette caractéristique permet notamment d'assurer un support optimal pour le produit à découper.

De plus, la bande support 20 des rayons 10 des lattes 8 permet d'éloigner du matériau 4 découpé l'impact du faisceau laser sur la bande oblique 21, ce qui limite les effets de pollution ou d'endommagement possible du matériau.

La bande support 20, qui est perpendiculaire au plan de dépose du matériau 4 à découper, assure également une meilleure tenue mécanique des lattes 8 au support du matériau. La bande de support 20 permet de mettre en oeuvre un déchargement par peigne.

La bande oblique 21, de forme générale trapézoïdale, est délimitée par deux bordures d'extrémités 26, 28, et par deux bordures de côtés 29.

Cette bande oblique 21 est reliée au niveau de sa bordure d'extrémité supérieure 26 à la bande support 20 par la ligne de pliage 23, selon un angle par exemple de 135° ; et elle est reliée au niveau de sa bordure d'extrémité inférieure 28 au talon 22 par la ligne de pliage 24, selon un angle par exemple également de 135°.

Les bordures de côtés 29 de la bande oblique 21 présentent un profil permettant d'épouser en partie la surface supérieure des replis obliques 16 des parois latérales 13 du bac 9.

Comme décrit précédemment, cette bande oblique 21 est destinée à assurer la déflection du faisceau laser 3.

Le talon 22 est délimité par deux bordures d'extrémités 28 et 30, et par deux bordures de côtés 31. La bordure d'extrémité supérieure 28 correspond à la ligne de pliage 24.

Le talon 22 présente deux parties, à savoir une partie supérieure de forme générale trapézoïdale et une partie inférieure rectangulaire. La distance entre les bordures de côtés de cette partie inférieure rectangulaire est légèrement inférieure à la distance entre les extrémités 32 des replis obliques 16 du bac 9.

Les bordures de côtés 31 de la partie supérieure du talon 22 sont destinées à épouser la surface supérieure du repli oblique 16 du bac 9 ; elles présentent chacune un ergot 33 dont la fonction sera explicitée plus loin.

Un évidement 34 oblong est aménagé au centre du talon 22. Cet évidement 34 occupe une surface optimale pour notamment diminuer le poids desdits rayons 8, sans diminuer leur résistance structurelle.

La solidarisation de chaque rayon 10 au sein du bac 9 est obtenue par l'insertion des tenons 33 dans les lumières 17 aménagées sur les replis latéraux obliques 16, occupant un rôle de mortaise (figures 7 et 8).

Ce mode de solidarisation des rayons 10 sur le bac 9 permet une fixation élastique, du type clipsage. Il est alors possible de remplacer aisément tout rayon endommagé, sans notamment nécessiter d'intervention sur les rayons adjacents et sans démonter la latte du tapis.

De plus, cette caractéristique permet éventuellement d'associer les rayons 10 à l'ensemble ou à seulement une partie des lumières 17 du repli oblique 16.

Comme représenté sur les figures 7 et 8, les rayons 10 sont positionnés dans le bac 9 par insertion à force de leurs tenons 33 dans deux lumières 17 en vis-à-vis des replis obliques 16, par une pression verticale.

Tel que représenté sur la figure 9, les rayons 10 contenus dans un bac 9 sont alors disposés parallèlement ou quasi-parallèlement les uns par rapport aux autres, mais aussi parallèlement à la paroi d'extrémité 12 du bac 9.

L'ensemble des lattes 8 juxtaposées dans un même plan, et en particulier l'ensemble des rayons 10 contenus dans lesdites lattes, forme le plan de dépose du produit à découper. Plus précisément encore, ce sont les arêtes supérieures 25 des rayons 10 qui forment le plan de dépose du produit.

Les arêtes supérieures 25 de deux rayons 10 juxtaposés sont espacées d'une distance d déterminée et homogène au soin d'une même latte ; cette distance d peut par exemple être de l'ordre 7 à 9 mm.

Dans le mode de réalisation illustré, cette distance d séparant deux rayons 10 est égale à la distance e séparant le plan ce la bande support 20 et le plan du talon 22. Cette caractéristique assure une déviation du faisceau laser 3, empêchant le faisceau 3 de traverser les lattes 8 sans déviation.

Selon une alternative cette distance d peut également être inférieure à la distance e.

Selon un autre mode de réalisation de l'invention illustré par la figure 10, les rayons 10 des lattes 8 sont dépourvus de talon inférieur.

Chaque rayon 10 se présente alors sous la forme d'une plaque de tôle mince pliée comprenant uniquement la bande support 20 dont l'arête supérieure libre 25 forme un élément support du matériau 4 à découper, et la bande oblique 21 assurant la déflection du faisceau laser 3. Les deux parties planes 20, 21 formant la bande support et la bande oblique sont raccordées par la ligne de pliage 23.

Comme dans le mode de réalisation précédent, les bordures de côtés (non représentées) de la bande oblique 21 des rayons 10 présentent un profil permettant d'épouser la surface supérieure des replis obliques 16 des parois latérales 13 du bac 9.

Les bordures de côtés de la bande oblique 21 présentent également chacune un ergot (non représenté) permettant la solidarisation de chaque rayon 10 au sein du bac 9. Cette solidarisation est obtenue par l'insertion de ces ergots dans des lumières ou encoches 17' aménagées sur les replis latéraux obliques 16 des parois latérales 13 du bac 9. Ces lumières 17' présentent une inclinaison sensiblement identique à celle des bandes obliques 21 des rayons 10.

On notera que, dans ce mode de réalisation, un évidement permettant de diminuer le poids des rayons et d'assurer une meilleure dissipation de la chaleur pourra être aménagé au niveau de la bande oblique 21 des rayons 10. Un tel évidement n'est pas représenté sur la figure 10.

On notera également qu'il peut être réalisé différentes catégories de bacs 9 dont les lumières 17, 17' sont plus ou moins espacées, et des rayons 10 dont l'inclinaison de la bande oblique 21 est plus ou moins prononcée, ce qui permet de moduler la distance entre les arêtes supérieures 25 des rayons 10.

A titre purement indicatif, la longueur du brin supérieur 37 du tapis 1 entre les deux rouleaux 5 supports peut être de l'ordre de 4 m. Les lattes 8 peuvent avoir une longueur de l'ordre de 250 cm et une largeur d'environ 8 à 10 cm ; la longueur utile de ladite latte 8 peut être de l'ordre de 240 cm.

Pour la mise en oeuvre de la machine illustrée sur la figure 1, le faisceau laser 3 est commandé en fonction de l'avancement du tapis 1 pour assurer la découpe, selon un motif programmé, du produit 4.

Lors de cette découpe certains déchets 35 peuvent potentiellement tomber entre les rayons 10, à travers les ouvertures inférieures 18 des bacs 9. Ces déchets 35 sont alors rassemblés dans un récipient de récupération 36 disposé directement sous le plan de dépose du produit, entre les deux brins 37, 38 du tapis 1.

Les déchets 35 qui resteraient éventuellement coincés au sein des lattes 8, par exemple entre les rayons 10, sont extraits de manière continue au fur et à mesure du déplacement de la table 1, par une brosse rotative 39 disposée à l'une des extrémités du tapis sans fin. Ce nettoyage est optimisé du fait de la disposition longitudinale des rayons 10.

Lorsque la table 1 est du type tapis mobile sans fin, le matériau 4 découpé est généralement prélevé à l'une des extrémités de la table. Cette opération est réalisée par un outil (non représenté) muni de peignes agencés de façon à venir s'insérer entre deux rayons 10 adjacents des lattes 8 au fur et à mesure du déplacement de la table. La présence d'une bande support 20 perpendiculaire au plan de dépose du matériau 4 facilite le positionnement de ces peignes, et donc le prélèvement du matériau découpé.

## Revendications

1. Latte (8) pour table de machine de découpe par faisceau laser, ladite latte (8) étant constituée d'un bac (9) qui contient une pluralité de rayons (10) juxtaposés, disposés parallèlement ou sensiblement parallèlement entre eux, **caractérisée en ce que** chaque rayon (10) se présente sous la forme d'une plaque de tôle mince pliée comprenant au moins deux parties raccordées le long d'une ligne de pliage (23), une première partie disposée sensiblement parallèlement à la direction d'incidence du faisceau laser et constituant une bande support (20) dont l'arête supérieure libre (25) forme un élément support du produit (4) à découper, et une deuxième partie inclinée par rapport à la direction d'incidence du faisceau laser et constituant une bande oblique (21) assurant la déflection du faisceau laser (3).

2. Latte selon la revendication 1, **caractérisée en ce que** chaque rayon (10) comprend en outre une troisième partie sensiblement parallèle à la première partie et formant un talon (22) raccordé à la bande oblique (21) le long d'une autre ligne de pliage (24).

3. Latte selon la revendication 2, **caractérisée en ce que** la distance e séparant le plan de la bande support (20) et le plan du talon (22), est supérieure ou égale à la distance d entre deux rayons (10) juxtaposés.

4. Latte selon l'une quelconque des revendications 1 à 3, **caractérisée en ce que** les rayons (10) sont fixés sur le bac (9) support par l'intermédiaire de moyens qui permettent leur démontage.

5. Latte selon la revendication 4, **caractérisée en ce qu'**elle comprend un bac (9) comportant notamment deux parois latérales (13) dont les extrémités supérieures (16) sont repliées vers l'intérieur, formant chacune un repli oblique muni d'une pluralité de lumières ou encoches (17, 17') réparties sur toute la longueur desdits replis (16), lesquelles lumières (17, 17') assurent la répartition des rayons (10) et reçoivent des ergots (33) aménagés sur chaque bordure de côté (31) desdits rayons (10), l'assemblage des ergots (33) dans les lumières (17, 17') correspondantes se faisant de façon élastique et par clipsage.

6. Latte selon l'une quelconque des revendications 1 à 5, **caractérisée en ce que** le rayon (10) comporte un évidement (34) de matière sur un maximum de surface compatible avec le maintien de la rigidité dudit rayon (10), lequel évidement (34) permet d'une part de réduire de façon notable le poids de chaque rayon (10) et par conséquent celui de la latte (8) et, d'autre part, permet une meilleure dissipation de la chaleur en assurant une circulation d'air ou autre au sein desdites lattes (8).

7. Table de machine de découpe laser, **caractérisée en ce qu'**elle est constituée d'une pluralité de lattes (8) juxtaposées, **caractérisée en ce que** les dites lattes sont selon l'une quelconque des revendications 1 à 6.

## Claims

1. Slat (8) for a laser beam-cutting machine table, said slat consisting of a trough (9) which contains a plurality of juxtaposed inserts (10) arranged parallel or substantially parallel to one another, **characterized in that** each insert (10) takes the form of a folded thin sheet-metal plate comprising at least two parts connected along a fold line (23), a first part arranged substantially parallel to the direction of incidence of the laser beam and constituting a support strip (20) whose free upper edge (25) forms a support element for the product (4) to be cut, and a second part which is inclined with respect to the direction of incidence of the laser beam and constitutes an oblique strip (21) for deflecting the laser beam (3).

2. Slat according to Claim 1, **characterized in that** each insert (10) additionally comprises a third part, which is substantially parallel to the first part and forms a heel (22) connected to the oblique strip (21) along another fold line (24).

3. Slat according to Claim 2, **characterized in that** the distance e separating the plane of the support strip (20) and the plane of the heel (22) is greater than or equal to the distance d between two juxtaposed inserts (10).

4. Slat according to any one of Claims 1 to 3, **characterized in that** the inserts (10) are fastened to the support trough (9) via means which allow them to be disassembled.

5. Slat according to Claim 4, **characterized in that** it comprises a trough (9) having in particular two lateral walls (13) whose upper ends (16) are folded inwards, each forming an oblique fold provided with a plurality of openings or slots (17, 17') distributed over the whole length of the said folds (16), which openings (17, 17') ensure that the inserts (10) are distributed and accommodate lugs (33) formed on each side edge (31) of the said inserts (10), the assembly of the lugs (33) in the corresponding openings (17, 17') taking place elastically and by clipping.

6. Slat according to any one of Claims 1 to 5, **characterized in that** the insert (10) has a material void (34) over a maximum area compatible with maintaining the rigidity of the said insert (10), which void (34) makes it possible on the one hand to significantly reduce the weight of each insert (10), and consequently that of the slat (8), and, on the other hand, makes it possible to achieve better heat dissipation by allowing air or another agent to circulate within the said slats (8).

7. Laser-cutting machine table, **characterized in that** it consists of a plurality of juxtaposed slats (8) **characterized in that** said slats are according to any one of Claims 1 to 6.

## Patentansprüche

1. Leiste (8) für den Tisch einer Laserstrahlschneidemaschine, wobei die Leiste (8) von einem Kasten (9) gebildet ist, der eine Vielzahl von nebeneinander liegenden, parallel zueinander oder im wesentlichen parallel zueinander angeordneten Rippen (10) enthält, **dadurch gekennzeichnet**, das jede Rippe (10) in Form einer dünnen, gebogenen Blechplatte vorlegt, die wenigstens zwei entlang einer Biegelinie (23) verbundene Teile aufweist, nämlich einen ersten Teil, der im wesentliche parallel zur Einfallrichtung des Laserstrahls angeordnet ist und eignen Tragstreifen (20) bildet, dessen obere freie Kante (25) ein Trageelement für das zu schneidende Produkt (4) bildet, sowie einen zweiten Teil, der in bezug auf die Einfallrichtung des Laserstrahls geneigt ist und einen Schrägstreifen (21) bildet, der das Ablenken des Laserstrahles (3) sicherstellt.

2. Leiste nach Anspruch 1, **dadurch gekennzeichnet, daß** jede Rippe (10) ferner einen dritten Teil aufweist, der zu dem ersten Teil im wesentlichen parallel herläuft und einen Ansatz (22) bildet, der mit dem Schrägstreifen (21) entlang einer weiteren Biegelinie (24) verbunden ist.

3. Leiste nach Anspruch 2, **dadurch gekennzeichnet, daß** der Abstand e zwischen der Ebene des Tragstreifens (20) und der Ebene des Ansatzes (22) größer als oder gleich dem Abstand d zwischen zwei nebeneinander liegenden Rippen (10) ist.

4. Leiste nach einem der Ansprüche 1 bis 3, **dadurch gekennzeichnet**, das die Rippen (10) an dem Tragkasten (9) mit Hilfe von Mitteln befestigt sind, die deren Ausbau ermöglichen.

5. Leiste nach Anspruch 4, **dadurch gekennzeichnet, daß** sie einen Kasten (9) umfaßt, der vor allem zwei Seitenwände (13) aufweist, deren obere Enden (16) nach innen umgebogen sind, wodurch sie jeweils einen geneigten Umschlag bilden, der mit einer vielzahl von Öffnungen oder Nuten (17,17') versehen ist, die über die gesamte Länge der Umschläge (16) verteilt sind, sie genannten Öffnungen (17,17') gewährleisten die Verteilung der Rippen (10) und nehmen Vorsprünge (33) auf, die an jedem Seitenrand (31) der Rippen (10) ausgebildet sind, wobei das Verbinden der Vorsprünge (33) in den entsprechenden Öffnungen (17, 17') auf elastische Weise und durch Festclipsen erfolgt,

6. Leiste nach einem der Ansprüche 1 bis 5, **dadurch gekennzeichnet, daß** die Rippe (10) eine Materialausnehmung (34) über eine Maximalfläche aufweist, die mit dem Aufrechterhalten der Steifigkeit der Rippe (10) vereinbar ist, die Ausnehmung (34) ermöglicht einerseits, das Gewicht jeder Rippe (10) und demzufolge das der Leiste (8) deutlich zu reduzieren und ermöglicht andererseits - durch Sicherstellen einer Luft-oder anderen Zirkulation innerhalb der Leisten (8) - eine bessere Ableitung der Wäre.

7. Tisch einer Laserschneidemaschine, **dadurch gekennzeichnet, daß** er von einer Vielzahl von nebeneinander angeordneten Leisten (8) gebildet ist, **dadurch gekennzeichnet, daß** die Leisten nach einem der Ansprüche 1 bis 6 sind.
